**Europäisches Patentamt**

**European Patent Office**

**Office européen des brevets**

(19)

(11) Veröffentlichungsnummer: **0 106 991 B1**

# EUROPÄISCHE PATENTSCHRIFT

(12)

(45) Veröffentlichungstag der Patentschrift:
**13.05.87**

(21) Anmeldenummer: **83108755.6**

(22) Anmeldetag: **06.09.83**

(51) Int. Cl.⁴: **C 08 F 222/02**, C 08 F 220/04, C 11 D 3/37, C 02 F 5/10 // (C08F222/02, 220:04), (C08F220/04, 222:02)

(54) **Verfahren zur Herstellung von Copolymeren aus monoethylenisch ungesättigten Mono- und Dicarbonsäuren(anhydride).**

(30) Priorität: **11.09.82 DE 3233775**

(43) Veröffentlichungstag der Anmeldung:
**02.05.84 Patentblatt 84/18**

(45) Bekanntmachung des Hinweises auf die Patenterteilung:
**13.05.87 Patentblatt 87/20**

(84) Benannte Vertragsstaaten:
**AT BE CH DE FR GB IT LI NL SE**

(56) Entgegenhaltungen:
**EP - A - 0 058 073**
**DE - A - 2 936 984**
**FR - A - 2 176 104**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Denzinger, Walter, Wormser Landstrasse 65, D-6720 Speyer (DE)**
Erfinder: **Hartmann, Heinrich, Dr., Weinheimer Strasse 46, D-6703 Limburgerhof (DE)**
Erfinder: **Trieselt, Wolfgang, Dr., Alwin-Mittasch-Platz 1, D-6700 Ludwigshafen (DE)**
Erfinder: **Hettche, Albert, Dr., Kleiststrasse 12, D-6717 Hessheim (DE)**
Erfinder: **Schneider, Rolf, Dr., Feldbergstrasse 21, D-6800 Mannheim 1 (DE)**
Erfinder: **Raubenheimer, Hans-Juergen, Benzstrasse 6, D-6834 Ketsch (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung von Copolymerisaten monoethylenisch ungesättigter Mono- und Dicarbonsäure-(anhydride) durch radikalische Suspensionspolymerisation.

Die DE-A 2 212 623 beschreibt im Beispiel 3 die Fällungspolymerisation von Maleinsäureanhydrid und Acrylsäure-Copolymerisaten in Benzol. Nachteile von Benzol sind Cancerogenität sowie die Entstehung von hochmolekularen Produkten (geringe Übertragungskonstante des Benzols), die als Inkrustationsinhibitoren schlechter wirksam sind.

In der älteren DE-A 3 140 383 wird die kontinuierliche Herstellung durch Massepolymerisation bei sehr hohen Temperaturen vorgeschlagen. Nachteilig ist dabei, dass die Produkte einen niedrigen K-Wert besitzen und das Produkt als Schmelze anfällt und dadurch zur Erzielung eines feinen Pulvers eine aufwendige Mahlung erforderlich ist.

Gemäss der älteren DE-A 3 138 574 erhält man Produkte mit sehr guter Inkrustationswirkung. Zur Isolierung der Copolymeren in fester Form als Pulver muss jedoch die Trocknung durch aufwendige Sprühtrocknung erfolgen, denn Wasser hat eine hohe Verdampfungswärme und es ist zur Trocknung daher ein hoher Energiebedarf nötig.

Das Ziel der Erfindung bestand darin, ein Verfahren zur Herstellung von Copolymeren monoethylenisch ungesättigter Mono- und Dicarbonsäuren(anhydride) in Pulverform zu entwickeln, welche in optimaler Weise die Verwendung gestatten, wie sie in der DE-A 2 936 984, auf die hier ausdrücklich Bezug genommen wird, dargestellt wird, nämlich als Inkrustationsinhibitoren, die den Waschmitteln in Pulverform zugesetzt werden. Weiterhin können die genannten Copolymeren für die scaling inhibition verwendet werden.

Dieses Ziel wird durch die Massnahmen erreicht, wie in den Patentansprüchen definiert sind. Sie bestehen darin, dass die Copolymerisation als Suspensionspolymerisation in einem aliphatischen und/oder cycloaliphatischen Kohlenwasserstoff als einem Lösungsmittel, in dem die Monomeren ganz oder zum Teil und die Copolymerisate unlöslich sind, und in Gegenwart von 0,05 bis 4 Gew.% bezogen auf die Monomeren, Schutzkolloiden durchgeführt wird, wobei mindestens ein Drittel des einzusetzenden Dicarbonsäureanhydrids im Reaktor vorgelegt und der Rest in höchstens zwei Dritteln der Zulaufzeit der Monocarbonsäuren von 2 bis 10 Stunden zudosiert werden und man die Polymerisation bei 50 bis 100°C startet und bei 130 bis 180°C zu Ende führt.

Ausgangsmonomere a) des erfindungsgemässen Verfahrens sind monoethylenisch ungesättigte Dicarbonsäureanhydride mit 4 bis 6 C-Atomen. Geeignete Dicarbonsäureanhydride sind beispielsweise Maleinsäure-, Itaconsäure-, Glutaconsäure-, Methylenmalonsäure-, Citraconsäureanhydrid und deren Mischungen untereinander.

Ausgangsmonomere b) sind monoethylenisch ungesättigte Monocarbonsäuren. Sie besitzen 3 bis 10 C-Atome im Molekül und es seien hier vor allem Acrylsäure oder Methacrylsäure genannt; jedoch kann man aber auch Vinylessigsäure, Allylessigsäure, Propylidenessigsäure, Ethylidenproprionsäure, Dimethylacrylsäure oder $C_2$- bis $C_6$-Alkylhalbester der obengenannten Dicarbonsäuren, vor allem der Maleinsäure, einsetzen. Auch Mischungen können zugesetzt werden.

Ausgangsmonomere c), die nicht unbedingt mit einpolymerisiert werden müssen, sind carboxylgruppenfreie mit den Monomeren a) und b) copolymerisierbare Monomeren, die bewirken, dass die gebildeten Copolymeren vorzugsweise in Wasser oder in verdünnten Alkalien löslich sind. Hier seien z.B. Acrylamid, Methacrylamid, (Meth)acrylnitril, 2-Acrylamido-2-methylpropansulfonsäure, Vinylsulfonsäure, Allylsulfonsäure, Vinylphosphonsäure, Allylphosphonsäure, Vinylacetat, Vinylpropionat, Allylalkohol, Acrolein, Hydroxyethyl- oder Hydroxypropyl(meth)acrylat, (Meth)acrylsäuremethyl- oder -ethylester, Diethylaminoethyl(meth)acrylat, $C_2$- bis $C_4$-Olefine, Alkylvinylether mit Alkylresten mit 1 bis 4 C-Atomen, sowie Mischungen, genannt.

Die Monomeren a) sind im Ansatz zu 60 bis 10%, vorzugsweise 50 bis 20 Gew.%, die Monomeren b) zu 40 bis 90, vorzugsweise 50 bis 80 Gew.%, anwesend. Die Monomeren c) können bis zu 20 Gew.% eingesetzt werden.

Als Lösungsmittel für die Suspensionspolymerisation kommen solche in Frage, in denen die Monomeren ganz oder zum Teil und die gebildeten Copolymeren unlöslich sind. Hierfür geeignet sind geradkettige und verzweigte aliphatische und cycloaliphatische Kohlenwasserstoffe. Vorzugsweise seien beispielsweise genannt Pentan, Hexan, Heptan, Octan, Isooctan, Cyclohexan, Diethylcyclohexan und Dimethylcyclohexan, wobei Cyclohexan, Methylcyclohexan und Isooctan bevorzugt sind.

Die Konzentration an zu polymerisierenden Monomeren liegen zwischen ca. 20 und 70%, bevorzugt 30 und 60%.

Bei der Durchführung der Suspensionspolymerisation ist es notwendig, ein Schutzkolloid zur Verhinderung der Aggregatbildung zuzusetzen. Als Schutzkolloide sind polymere Stoffe geeignet, die in den Lösungsmitteln gut löslich sind, keine Reaktion mit den Monomeren eingehen und möglichst hydrophil sind. Geeignet sind beispielsweise Copolymere des Maleinsäureanhydrids mit Vinylalkylethern und 1 bis 20 Alkyl-C-Atomen und Olefinen mit 8 bis 20 C-Atomen, sowie deren Mono-Ester mit $C_{10}$- bis $C_{20}$-Alkoholen oder Monoamide mit $C_{10}$- bis $C_{20}$-Alkylaminen sowie Polyalkylvinylethern, deren Alkylgruppe 1 bis 20 C-Atome enthalten, wie beispielsweise Polymethyl-, Polyethyl- und Polyisobutylvinylether, die auch bevorzugt sind. Die zugesetzten Mengen an Schutzkolloid liegen üblicherweise bei 0,05 bis 4 Gew.% (berechnet auf eingesetzte Monomere), vorzugsweise 0,1 bis 2%, wobei es oftmals besonders günstig ist, mehrere Schutzkolloide zu kombinieren.

Zur Erzielung von Copolymeren mit niedrigen Restgehalten an monomerem Dicarbonsäureanhydrid ist es zwingend notwendig, mindestens $1/_3$ des Dicarbonsäureanhydrids mit den Lösungsmitteln im Reaktor vorzulegen und den Rest des Dicarbonsäureanhydrids in $2/_3$ der Zulaufzeit der Monocarbonsäure zuzufahren. Meist ist es von Vorteil, das gesamte Dicarbonsäureanhydrid im Reaktor vorzulegen. Die Monocarbonsäure muss immer zugefahren werden, wobei Zulaufzeiten von 2 bis 10 Stunden, vorzugsweise 3 bis 7 Stunden, erforderlich sind. Das Comonomere c) kann sowohl ganz als auch teilweise vorgelegt oder auch mit der Monocarbonsäure zudosiert werden.

Die Polymerisationstemperatur liegt zwischen 50 und 180°C, wobei es von Vorteil ist, bei Temperaturen von 50 bis 100°C die Hauptreaktion durchzuführen, um Copolymere mit mittleren K-Werten zu erzielen und dann zum Auspolymerisieren die Temperaturen auf max. 180°C zu erhöhen, um niedrige Restgehalte an monomerer Dicarbonsäure zu erzielen.

Als radikalische Initiatoren sind alle Radikalspender geeignet, die bei den gewählten Temperaturen eine Halbwertszeit von < 3 Stunden besitzen. Wird beispielsweise bei niedriger Temperatur anpolymerisiert und bei höherer Temperatur auspolymerisiert, so muss mit mindestens 2 Initiatoren gearbeitet werden. Beispielsweise sind für die genannten Polymerisationstemperaturen folgende Initiatoren geeignet:

Temp.: 50 bis 60°C:
Acetylcyclohexansulfonylperoxid, Dicetylperoxiddicarbonat, Dicyclohexylperoxiddicarbonat, Di-2-ethylhexylperoxiddicarbonat, tert.-Butylperneodecanoat, 2,2′-Azobis-(4-methoxi-2,4-dimethylvaleronitril)

Temp.: 70 bis 80°C:
tert.-Butylperpivalat, Dioctanoylperoxid, Dilauroylperoxid, 2,2′-Azobis-(2,4-dimethylvaleronitril)

Temp.: 90 bis 100°C:
Dibenzoylperoxid, tert.-Butylper-2-ethylhexanoat, tert.-Butylpermaleinat, 2,2-Azobis-(isobutyronitril)

Temp.: 110 bis 120°C:
Bis-(tert.-butylperoxi)-cyclohexan, tert.-Butylperoxiisopropylcarbonat, tert.-Butylperacetat

Temp.: 130 bis 140°C:
2,2-Bis-(tert.-butylperoxi)-butan, Dicumylperoxid, Di-tert.-amylperoxid, Di-tert.-butylperoxid

Temp.: 150°C:
p-Methanhydroperoxid, Pinanhydroperoxid, Cumolhydroperoxid, tert.-Butylhydroperoxid.

Durch die Mitverwendung von Redox-Coinitiatoren, wie beispielsweise Benzoin, Dimethylanilin sowie organisch lösliche Komplexe und Salze von Schwermetallen wie Kupfer, Kobalt, Mangan, Eisen, Nickel, Chrom können die Halbwertszeiten der genannten Peroxide, besonders der Hydroperoxide, verringert werden, so dass beispielsweise tert.-Butylhydroperoxid in Gegenwart von 5 ppm Kupfer-II-Acetylacetonat bereits bei 100°C wirksam ist.

Für die Polymerisation geeignete Apparaturen sind übliche Rührkessel mit Anker-, Blatt-, Impeller- oder Mehrstufenimpulsgegenstromrührer. Besonders geeignet sind Apparaturen, die im Anschluss an die Polymerisation die direkte Isolierung des Festproduktes gestatten, wie z.B. Schaufeltrockner.

Die erhaltenen Polymerisatsuspensionen können direkt in Verdampfern wie beispielsweise Bandtrocknern, Schaufeltrocknern, Sprühtrocknern und Wirbelbetttrocknern getrocknet werden. Man kann aber auch durch Filtrieren oder Zentrifugieren von der Hauptmenge der Lösungsmittel abtrennen und gegebenenfalls durch Nachwaschen mit frischen Lösungsmitteln Reste von Initiator, Monomeren und Schutzkolloiden entfernen und erst dann trocknen.

Meist fallen die Copolymeren in Form eines feinen Pulvers an, das oft den pulver- oder granulatförmigen Waschmitteln direkt als Inkrustationsinhibitor zugemischt werden kann. Oftmals ist es jedoch von Vorteil, die Copolymerisatpulver durch Mischen mit Alkalicarbonaten in Salze überzuführen und dann erst den Waschmitteln zuzumischen.

Natürlich können aus den Copolymerisatsuspensionen durch direkte Zugabe von Wasser und anschliessendes Abdestillieren des Lösungsmittels mit Wasserdampf die wässrigen Polymerisatlösungen erhalten werden, die dann je nach Bedarf mit Alkali, Aminen, Ethanolaminen oder Ammoniak neutralisiert werden können.

Die Polymerisate weisen K-Werte zwischen 8 und 80, meistens aber 10 bis 40 auf. Sie entsprechen sämtlichen Erfordernissen, wie sie für gute Inkrustationsinhibitoren in der DE-A-2 936 984 dargestellt sind.

Die folgenden Beispiele erläutern die Erfindung. Angegebene Teile sind Gewichtsteile, soweit sie nicht anders bezeichnet werden. Die K-Werte werden nach H. Fikentscher, Cellulosechemie 13, S. 60 (1932) in 2%igen Lösungen in Dimethylformamid bei 25°C bestimmt. Die monomere Dicarbonsäure wird auf polarographischem Wege bestimmt (s. «Polarographische Arbeitsmethoden» von Dr. Mark von Stackelberg, erschienen 1950 im Verlag Walter de Gruyter und Co., Berlin W35).

Beispiel 1
In einem gerührten Reaktor werden 500 Teile Cyclohexan, 100 Teile Maleinsäureanhydrid und 5 Teile Polyethylvinylether vom K-Wert 50 bis zum Sieden auf ca. 83°C erhitzt und innerhalb 3 Stunden 140 Teile wasserfreie Acrylsäure und eine Lösung von 2,4 Teilen Tertiärbutylper-2-ethylhexanoat in 60 Teilen Cyclohexan zudosiert. Anschliessend wird noch 1 Stunde bei Rückfluss nacherhitzt, 1,2 Teile Tertiärbutylper-2-ethylhexanoat nachgegeben und nochmals 3 Stunden am Rückfluss erhitzt. Nach dem Abkühlen wird die feinkörnige Suspension abzentrifugiert und dann das Copolymere bei 80°C in einem Vakuumtrockenschrank getrocknet. Die Ausbeute an einem sehr feinen, weissen Polymeren beträgt 235 Teile. Der K-Wert ist 59 und der Restgehalt an monomerer Maleinsäure beträgt 1,4%.

Beispiel 2

In einem gerührten Reaktor werden 500 Teile Isooctan (techn. Isomerengemisch), 100 Teile Maleinsäureanhydrid und 5 Teile Polyisobutylvinylether vom K-Wert 60 bis zum Sieden auf ca. 99°C erhitzt und innerhalb von 5 Stunden 140 Teile wasserfreie Acrylsäure und eine Suspension von 5 Teilen 2,2-Azobis-(isobutyronitril) in 50 Teilen Isooctan zudosiert. Anschliessend wird der Kessel druckdicht verschlossen und auf 140°C erhitzt. Bei 140°C werden innerhalb 2 Stunden 2,4 Teile Ditertiärbutylperoxid gelöst in 60 Teilen Isooctan zudosiert und anschliessend noch 2 Stunden nacherhitzt. Nach dem Abkühlen wird die feine Suspension abzentrifugiert und im Vakuum bei 80°C getrocknet. Die Ausbeute an einem feinen weissen Pulver beträgt 235 Teile. Das Produkt besitzt einen K-Wert von 39,4 und der Restgehalt an monomerem Maleinsäureanhydrid beträgt 0,36%.

Beispiel 3

In einem gerührten Reaktor werden 500 Teile Methylcyclohexan, 80 Teile Maleinsäureanhydrid, 1,5 Teile Polyethylvinylether vom K-Wert 50 und 1,5 Teile Polyoctadecylvinylether vom K-Wert 30 bis zum Sieden auf 102°C erhitzt und anschliessend innerhalb 4 Stunden 160 Teile wasserfreie Acrylsäure und 4,8 Teile Tertiärbutylper-2-ethylhexanoat gelöst in 60 Teilen Methylcyclohexan zudosiert. Anschliessend wird auf 135°C unter Druck erhitzt, 2,4 Teile Ditertiäramylperoxid, gelöst in 50 Teilen Methylcyclohexan, innerhalb 2 Stunden zudosiert und anschliessend noch 2 Stunden nacherhitzt. Nach Abkühlen wird die feine Suspension abzentrifugiert und im Schaufeltrockner bei 60°C und Wasserstrahlvakuum getrocknet. Die Ausbeute beträgt 237 Teile eines feinen Copolymeren vom K-Wert 28,6 mit einem Restgehalt an monomerem Maleinsäureanhydrid von 0,34%.

Beispiel 4

In einem gerührten Reaktor werden 400 Teile n-Octan, 40 Teile Maleinsäureanhydrid, 60 Teile Itaconsäureanhydrid und 4 Teile des Stearylesters eines molaren Copolymeren aus Maleinsäureanhydrid und Diisobuten vom K-Wert 40 auf ca. 125°C bis zum Sieden erhitzt und innerhalb 6 Stunden eine Mischung aus 70 Teilen Acrylsäure, 70 Teilen Methacrylsäure und 0,005 Teilen Kupferacetylacetonat und eine Lösung von 4,8 Teilen Tertiärbutylhydroperoxid in 50 Teilen n-Octan zudosiert. Anschliessend wird noch 4 Stunden nacherhitzt. Nach dem Abkühlen wird die feine Suspension in einem Inertgassprühtrockner getrocknet. Das feine Pulver besitzt einen K-Wert von 23,6 und einen Restgehalt an monomerem Maleinsäure- und Itaconsäureanhydrid von 0,88%.

Beispiel 5

In einem gerührten Reaktor werden 500 Teile Cyclohexan, 50 Teile Maleinsäureanhydrid und 5 Teile Polyethylvinylether vom K-Wert 50 bis zum Sieden erhitzt und innerhalb 4 Stunden 50 Teile Maleinsäureanhydrid in flüssiger Form (Temp. 70°C) und innerhalb 6 Stunden 140 Teile wasserfreie Acrylsäure und 2,4 Teile Tertiärbutylperpivalat gelöst und 60 Teile Cyclohexan zudosiert. Anschliessend werden 1,2 Teile Tertiärbutylper-2-ethylhexanoat zugesetzt und noch weitere 4 Stunden erhitzt. Nach dem Abkühlen wird die feinkörnige Suspension abzentrifugiert und bei 80°C im Vakuumtrockenschrank das Copolymere getrocknet. Die Ausbeute beträgt 238 Teile eines feinen weissen Pulvers. Der K-Wert ist 37,5 und der Gehalt an monomerem Maleinsäureanhydrid 0,56%.

Anwendungstechnische Prüfung der nach Beispiel 1 bis 5 hergestellten Copolymerisate:

Testgewebe aus Baumwolle (BW 222) wurden mit einem Testwaschmittel und Zusätzen verschiedener Polymerisate gewaschen. Danach wurden die Prüflinge verascht und der Grad der Inkrustierung als Prozent Aschegehalt bestimmt.

Das Testwaschmittel hatte folgende Zusammensetzung, genügt also als phosphatreduziertes Waschmittel bei entsprechender Dosierung der Stufe 1 der Phosphathöchstmengenverordnung zum deutschen Waschmittelgesetz:

| 7 | % Alkylbenzolsulfonat, Na-Salz |
| 2 | % Nonionic (Gemisch aus $C_{12}$-$C_{14}$-Fettalkohol mit 3 Mol Ethylenoxid und $C_{16}$-$C_{18}$-Fettalkohol mit 12 Mol Ethylenoxid) |
| 2,5 | % Seife |
| 28 | % Natriumperborat (Tetrahydrat) |
| 5 | % Natriumsilikat |
| 25 | % Natriumtripolyphosphat |
| 1,5 | % Carboxymethylcellulose |
| 0,5 | % optischer Aufheller |
| Rest Stellmittel ($Na_2SO_4$) und Feuchtigkeit | |

Allgemeine Prüfbedingungen:
Gerät: Launder-0-meter (Fa. Atlas, Chicago, USA)
Temperatur: 20 min bei 40 bis 95°C, 25 min bei 95°C
Waschcyclen: 20
Wasserhärte: 22° d
Flottenverhältnis: 1:12,5
Testgewebe: Baumwollnessel Nr. 222 und Baumwollfrottee
Veraschung: 2 Stunden bei 600°C

Testergebnisse

| Zusatz zum Testwaschmittel | % Asche | |
|---|---|---|
| | BW 222 | Frottee |
| ohne Zusatz | 5,9 | 11,4 |
| 2% Polyacrylsäure (K-Wert 110) | 3,5 | 8,0 |
| Copolymerisat gemäss Beispiel 1 | 1,3 | 3,0 |
| Copolymerisat gemäss Beispiel 2 | 1,2 | 2,7 |
| Copolymerisat gemäss Beispiel 3 | 1,0 | 2,4 |
| Copolymerisat gemäss Beispiel 4 | 1,2 | 2,8 |
| Copolymerisat gemäss Beispiel 5 | 0,9 | 2,0 |

## Patentansprüche

1. Verfahren zur Herstellung von Copolymerisaten von einem K-Wert zwischen 8 und 80, die monoethylenisch ungesättigte Mono- und Dicarbonsäureeinheiten einpolymerisiert enthalten, durch radikalische Copolymerisation von – bezogen auf die Polymerisate –

a) 10 bis 60 Gew.% Maleinsäure- oder Itaconsäureanhydrid oder deren Mischungen,

b) 90 bis 40 Gew.% Acryl- oder Methacrylsäure oder deren Mischungen und

c) 0 bis 20 Gew.% eines sonstigen carboxylgruppenfreien, mit a) und b) copolymerisierbaren, monoethylenisch ungesättigten Monomeren,

dadurch gekennzeichnet, dass die Copolymerisation als Suspensionspolymerisation in einem aliphatischen und/oder cycloaliphatischen Kohlenwasserstoff als einem Lösungsmittel, in dem die Monomeren ganz oder zum Teil und die Copolymerisate unlöslich sind, und in Gegenwart von 0,05 bis 4 Gew.%, bezogen auf die Monomeren, Schutzkolloiden durchgeführt wird, wobei mindestens ein Drittel des einzusetzenden Dicarbonsäureanhydrids im Reaktor vorgelegt und der Rest in höchstens zwei Dritteln der Zulaufzeit der Monocarbonsäuren von 2 bis 10 Stunden zudosiert werden und man die Polymerisation bei 50 bis 100°C startet und bei 130 bis 180°C zu Ende führt.

2. Verfahren nach Anspruch 1, dadurch gekennzeichnet, dass man die Polymerisation in Gegenwart von radikalbildenden Initiatoren oder Mischungen solcher Initiatoren durchführt, deren Halbwertszeit bei der gewählten Polymerisationstemperatur < 3 Stunden beträgt.

3. Verfahren nach Ansprüchen 1 und 2, dadurch gekennzeichnet, dass als Schutzkolloide Polymerisate von C₁- bis C₂₀-Alkylvinylethern eingesetzt werden.

## Claims

1. A process for the preparation of a copolymer having a K value of from 8 to 80 and containing copolymerized monoethylenically unsaturated mono- and dicarboxylic acid units, by free-radical copolymerization of

a) from 10 to 60% by weight of maleic anhydride or itaconic anhydride or mixtures thereof,

b) from 90 to 40% by weight of acrylic acid or methacrylic acid or mixtures thereof, and

c) from 0 to 20% by weight of another, carboxyl-free monoethylenically unsaturated monomer which is copolymerizable with a) and b),

the percentages being based on the polymer, wherein the copolymerization is carried out as a suspension polymerization in an aliphatic and/or cycloaliphatic hydrocarbon as a solvent in which some or all of the monomers, and the copolymer, are insoluble, and in the presence of from 0.05 to 4% by weight, based on the monomers, of a protective colloid, at least one third of the dicarboxylic acid anhydride to be employed being initially charged into the reactor and the remainder being metered in over not more than two thirds of the feed time for the monocarboxylic acids of from 2 to 10 hours, and the polymerization is initiated at from 50 to 100°C and completed at from 130 to 180°C.

2. A process as claimed in claim 1, wherein the polymerization is carried out in the presence of a free-radical initiator, or a mixture of such initiators, whose half life is < 3 hours at the polymerization temperature chosen.

3. A process as claimed in claims 1 and 2, wherein the protective colloid used is a polymer of a C₁-C₂₀-alkyl vinyl ether.

## Revendications

1. Procédé de préparation de copolymères ayant une valeur K comprise entre 8 et 80 et contenant à l'état polymérisé des motifs d'acides monocarboxyliques et d'acides dicarboxyliques monoéthyléniquement insaturés, par copolymérisation radicalaire de – exprimés par rapport aux polymères –

a) 10 à 60% en poids d'anhydride maléique ou d'anhydride itaconique ou de mélanges de ceux-ci,

b) 90 à 40% en poids d'acide acrylique ou d'acide méthacrylique ou de mélanges de ceux-ci,

c) 0 à 20% en poids d'un autre monomère monoéthyléniquement insaturé, exempt de groupes carboxyle, copolymérisable avec a) et b),

caractérisé en ce que la copolymérisation est effectuée sous forme de polymérisation en suspension, dans un hydrocarbure aliphatique et/ou cycloaliphatique en tant que solvant, dans lequel les monomères sont totalement ou partiellement insolubles et les copolymères sont insolubles, et en présence de 0,05 à 4% en poids, par rapport aux monomères, de colloïdes protecteurs, au moins un tiers de l'anhydride d'acide dicarboxylique à mettre en œuvre étant placé dans le réacteur et le restant étant introduit en quantité dosée en au plus les deux tiers du temps d'introduction des acides monocarboxyliques de 2 à 10 heures, et la polymérisation étant mise en route à une température de 50 à 100°C et étant terminée à une température de 130 à 180°C.

2. Procédé suivant la revendication 1, caractérisé en ce que l'on effectue la polymérisation en présence d'initiateurs formateurs de radicaux libres ou de mélanges de tels initiateurs, dont la vie moyenne à la température choisie pour la polymérisation est inférieure à trois heures.

3. Procédé suivant les revendications 1 et 2, caractérisé en ce que l'on met en œuvre, en tant que colloïdes protecteurs, des polymères de $C_1$-$C_{20}$-alkylvinyléthers.